# EUROPÄISCHE PATENTANMELDUNG

(11) **EP 3 760 884 A1**
(43) Veröffentlichungstag der Anmeldung: **06.01.2021**
(21) Anmeldenummer: 19184079.2
(22) Anmeldetag: 03.07.2019
(51) Int. Cl.: F16B 25/00, F16B 25/10, F16B 35/06

(54) **TROCKENBAUSCHRAUBE**

(71) Anmelder: Hilti Aktiengesellschaft, 9494 Schaan (LI)
(72) Erfinder: Haag, Stefan, 9470 Buchs (CH)
(74) Vertreter: Hilti Aktiengesellschaft Corporate Intellectual Property

(57) **Zusammenfassung**

Trockenbauschraube (1) zur Befestigung einer Gipskartonplatte an einem Metallträger, mit einem Kopf (2), einem Spitzenabschnitt (3) und einem länglichen Schaft (4), wobei der Schaft in seiner Längsrichtung eine Achse definiert und sich entlang der Achse vom Kopf bis zum Spitzenabschnitt erstreckt, wobei der Spitzenabschnitt sich an den Schaft anschliesst und dafür geeignet ist, in der Gipskartonplatte ein erstes Bohrloch und in dem Metallträger ein zweites Bohrloch zu erzeugen, wenn die Trockenbauschraube in Richtung der Achse durch die Gipskartonplatte getrieben wird, wobei die Trockenbauschraube ein Aufweitelement (5) aufweist, welches dafür geeignet ist, das erste Bohrloch in der Gipskartonplatte bis zu einem ersten Bohrlochdurchmesser t aufzuweiten und bei einem Auftreffen auf den Metallträger abzubrechen, wobei der Kopf den ersten Bohrlochdurchmesser t mit einem Einpressvolumen V₁ überschreitet, wobei der Schaft einen mit einem Gewinde (6) versehenen Gewindeabschnitt (7) und einen entlang der Achse zwischen dem Gewindeabschnitt und dem Kopf angeordneten, gewindefreien Unterkopfabschnitt (8) aufweist, welcher den ersten Bohrlochdurchmesser t mit einem Aufnahmevolumen V₂ unterschreitet, welches mindestens 80% des Einpressvolumens V₁ beträgt.

## Beschreibung

### Technisches Gebiet

Die Erfindung betrifft eine Trockenbauschraube zur Befestigung einer Gipskartonplatte an einem Metallträger.

### Stand der Technik

Derartige Trockenbauschrauben weisen häufig einen Kopf, einen Spitzenabschnitt und einen länglichen Schaft auf, wobei der Schaft in seiner Längsrichtung eine Achse definiert und sich entlang der Achse vom Kopf bis zum Spitzenabschnitt erstreckt. Bekannte Trockenbauschrauben erzeugen in der Gipskartonplatte jeweils ein erstes Bohrloch, wenn die Trockenbauschraube in Richtung der Achse durch die Gipskartonplatte getrieben wird. Üblicherweise wird die Trockenbauschraube so weit durch die Gipskartonplatte getrieben, dass die der Kopf nicht über eine ebene Oberfläche der Gipskartonplatte hervorsteht. Der Kopf verdrängt dabei ein gewisses Volumen der Gipskartonplatte, so dass die Gefahr besteht, dass sich die Oberfläche der Gipskartonplatte aufwölbt, was den optischen Eindruck einer glatten und ebenen Oberfläche beeinträchtigt.

### Darstellung der Erfindung

Aufgabe der Erfindung ist es, eine Trockenbauschraube zur Verfügung zu stellen, bei der die Gefahr einer Wölbung der Oberfläche der Gipskartonplatte reduziert wird.

Die Aufgabe wird gelöst durch eine Trockenbauschraube zur Befestigung einer Gipskartonplatte an einem Metallträger, mit einem Kopf, einem Spitzenabschnitt und einem länglichen Schaft, wobei der Schaft in seiner Längsrichtung eine Achse definiert und sich entlang der Achse vom Kopf bis zum Spitzenabschnitt erstreckt, wobei der Spitzenabschnitt sich an den Schaft anschliesst und dafür geeignet ist, in der Gipskartonplatte ein erstes Bohrloch und in dem Metallträger ein zweites Bohrloch zu erzeugen, wenn die Trockenbauschraube in Richtung der Achse durch die Gipskartonplatte getrieben wird, wobei die Trockenbauschraube ein Aufweitelement aufweist, welches dafür geeignet ist, das erste Bohrloch in der Gipskartonplatte bis zu einem ersten Bohrlochdurchmesser t aufzuweiten und bei einem Auftreffen auf den Metallträger abzubrechen, wobei der Kopf den ersten Bohrlochdurchmesser t mit einem Einpressvolumen V₁ überschreitet, wobei der Schaft einen mit einem Gewinde versehenen Gewindeabschnitt und einen entlang der Achse zwischen dem Gewindeabschnitt und dem Kopf angeordneten, gewindefreien Unterkopfabschnitt aufweist, welcher den ersten Bohrlochdurchmesser t mit einem Aufnahmevolumen V₂ unterschreitet, welches mindestens 80% des Einpressvolumens V₁ beträgt. Bevorzugt beträgt das Aufnahmevolumen V₂ mindestens 100% des Einpressvolumens V₁. Dadurch kann der gewindefreie Unterkopfabschnitt ein von dem Kopf verdrängtes Material der Gipskartonplatte aufnehmen, so dass die Gefahr der Wölbung der Oberfläche der Gipskartonplatte reduziert ist.

Eine vorteilhafte Ausführungsform ist dadurch gekennzeichnet, dass das Aufweitelement einen oder mehrere Vorsprünge umfasst. Bevorzugt sind die mehreren Vorsprünge gleichmässig auf einem Umfang der Trockenbauschraube verteilt. Ebenfalls bevorzugt sind der oder die Vorsprünge flügelförmig ausgebildet.

Eine vorteilhafte Ausführungsform ist dadurch gekennzeichnet, dass das Aufweitelement an dem Gewindeabschnitt angeordnet ist. Bevorzugt wird das Gewinde von dem Aufweitelement unterbrochen.

Eine vorteilhafte Ausführungsform ist dadurch gekennzeichnet, dass das Aufweitelement an dem Spitzenabschnitt angeordnet ist.

Eine vorteilhafte Ausführungsform ist dadurch gekennzeichnet, dass sich das Gewinde des Gewindeabschnitts in dem Spitzenabschnitt fortsetzt.

Eine vorteilhafte Ausführungsform ist dadurch gekennzeichnet, dass das Gewinde des Gewindeabschnitts geeignet ist, in das zweite Bohrloch in dem Metallträger ein Gegengewinde zu formen.

Eine vorteilhafte Ausführungsform ist dadurch gekennzeichnet, dass das Gewinde des Gewindeabschnitts einen Aussendurchmesser d1 aufweist, welcher höchstens 120% des ersten Bohrlochdurchmessers beträgt. Bevorzugt beträgt der Aussendurchmesser d1 höchstens 100% des ersten Bohrlochdurchmessers t.

Eine vorteilhafte Ausführungsform ist dadurch gekennzeichnet, dass der Kopf ein Schneidelement zum Zerschneiden einer Kartonageeinfassung der Gipskartonplatte aufweist. Bevorzugt ist das Schneidelement an einer dem Spitzenabschnitt zugewandten Unterseite des Kopfes angeordnet. Ebenfalls bevorzugt umfasst das Schneidelement eine oder mehrere sägezahnförmige erste Schneidkanten, welche besonders bevorzugt gleichmässig auf einem Umfang der Trockenbauschraube verteilt angeordnet sind. Ebenfalls bevorzugt umfasst das Schneidelement eine oder mehrere spiralförmige zweite Schneidkanten, welche besonders bevorzugt gleichmässig auf dem Umfang der Trockenbauschraube verteilt angeordnet sind. Besonders bevorzugt sind die eine oder mehreren zweiten Schneidkanten gegensinnig zu dem Gewinde des Gewindeabschnitts orientiert.

### Ausführungsbeispiele

Die Erfindung wird nachstehend anhand von Ausführungsbeispielen unter Bezugnahme auf die Zeichnungen näher erläutert. Es zeigen:
- Fig. 1: eine Trockenbauschraube in einer Seitenansicht und
- Fig. 2: einen Kopf einer Trockenbauschraube in einer Seitenansicht.

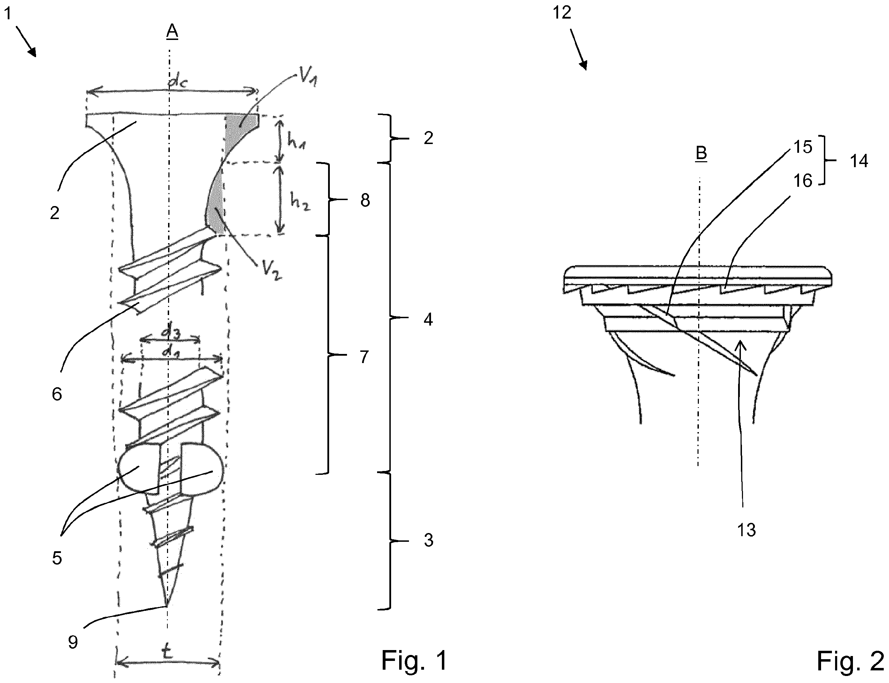

In Fig. 1 ist eine Trockenbauschraube 1 zur Befestigung einer nicht gezeigten Gipskartonplatte an einem ebenfalls nicht gezeigten Metallträger dargestellt. Die Trockenbauschraube umfasst einen Kopf 2, einen eine Spitze 9 aufweisenden Spitzenabschnitt 3 und einen länglichen Schaft 4. Der Schaft 4 weist einen Schaftdurchmesser d₃ auf, definiert in seiner Längsrichtung eine Achse A und erstreckt sich entlang der Achse A vom Kopf bis zum Spitzenabschnitt 3, welcher sich an den Schaft 4 anschliesst. Der Spitzenabschnitt 3 ist dafür geeignet, in der Gipskartonplatte ein erstes Bohrloch und in dem Metallträger ein zweites Bohrloch zu erzeugen, wenn die Trockenbauschraube 1 in Richtung der Achse A durch die Gipskartonplatte getrieben wird. Die Trockenbauschraube 1 weist weiterhin ein Aufweitelement 5 auf, welches zwei bezüglich der Achse A einander gegenüberliegende, flügelförmige Vorsprünge umfasst und dafür geeignet ist, das erste Bohrloch in der Gipskartonplatte bis zu einem von einer bezüglich der Achse A radialen Ausdehnung des Aufweitelements 5 vorgegebenen ersten Bohrlochdurchmesser t aufzuweiten. Bei einem Auftreffen auf den Metallträger bricht das Aufweitelement 5 dagegen ab.

Der Kopf 2 überschreitet den ersten Bohrlochdurchmesser t mit einem bezüglich der Achse A symmetrischen, also ringförmigen Einpressvolumen V₁, von dem in Fig. 1 lediglich eine Querschnittsfläche zu sehen ist. In Richtung der Achse A weist der Kopf 2 eine Höhe h₁ auf. Der Schaft 4 weist einen mit einem Gewinde 6 versehenen Gewindeabschnitt 7 und einen entlang der Achse A zwischen dem Gewindeabschnitt 7 und dem Kopf 2 angeordneten, gewindefreien Unterkopfabschnitt 8 auf. Der Unterkopfabschnitt 8 unterschreitet den Bohrlochdurchmesser t mit einem Aufnahmevolumen V₂, von dem ebenfalls in Fig. 1 lediglich eine Querschnittsfläche zu sehen ist. In Richtung der Achse A weist der Unterkopfabschnitt 8 eine Höhe h₂ auf. Das Aufnahmevolumen V₂ beträgt beispielsweise 110% des Einpressvolumens V₁. Dadurch kann der gewindefreie Unterkopfabschnitt 8 ein von dem Kopf 2 verdrängtes Material der Gipskartonplatte aufnehmen. Bei nicht gezeigten Ausführungsbeispielen beträgt das Aufnahmevolumen V₂ weniger als 100% des Einpressvolumens V₁. Dadurch, dass sich das verdrängte Material der Gipskartonplatte bis zu einem gewissen Grad zusammenpressen lässt, kann der Unterkopfabschnitt das Material unter Umständen dennoch aufnehmen.

Das Aufweitelement 5 ist an einem Übergang von dem Schaft 2 zu dem Spitzenabschnitt 3 und somit an dem Gewindeabschnitt 7 des Schafts 2 und an dem Spitzenabschnitt 3 angeordnet. Das Gewinde 6 setzt sich in dem Spitzenabschnitt 3 fort, wird lediglich von dem Aufweitelement 5 unterbrochen und erstreckt sich bevorzugt bis zu der Spitze 9. Das Gewinde 6 ist als selbstformendes, insbesondere selbstfurchendes Gewinde ausgebildet und daher geeignet, in das zweite Bohrloch in dem Metallträger ein Gegengewinde zu formen. Das Gewinde 6 des Gewindeabschnitts 7 weist einen Aussendurchmesser d₁ auf, welcher etwa 90% des ersten Bohrlochdurchmessers t beträgt. Am Gewindegrund des Gewindes 6 weist der Gewindeabschnitt 7 den Schaftdurchmesser d₃ auf. Der erste Bohrlochdurchmesser t ist bevorzugt grösser als der Schaftdurchmesser d₃. Bei nicht gezeigten Ausführungsbeispielen beträgt der Aussendurchmesser d₁ mehr als 100% des ersten Bohrlochdurchmessers t. Das Gewinde schneidet dann unter Umständen ein Gegengewinde in das Material der Gipskartonplatte, was aber nicht weiter stört.

In Fig. 2 ist ein Kopf 12 einer nicht weiter gezeigten Trockenbauschraube in einer Seitenansicht dargestellt. Die Trockenbauschraube weist einen nicht gezeigten Spitzenabschnitt mit einer Spitze auf, welcher sich in Fig. 2 unterhalb des Kopfes 12 befindet. Auf einer dem Spitzenabschnitt zugewandten Unterseite 13 des Kopfes 12 ist ein Schneidelement 14 zum Zerschneiden einer Kartonageeinfassung der Gipskartonplatte angeordnet. Das Schneidelement 14 umfasst mehrere sägezahnförmige erste Schneidkanten 15, welche gleichmässig auf einem Umfang der Trockenbauschraube verteilt angeordnet sind und in Richtung der Achse B von dem Umfang der Trockenbauschraube abragen. Weiterhin umfasst das Schneidelement 14 mehrere spiralförmige zweite Schneidkanten 16, welche ebenfalls gleichmässig auf dem Umfang der Trockenbauschraube verteilt angeordnet und gegensinnig zu einem Gewinde eines Gewindeabschnitts der Trockenbauschraube orientiert sind.

Die Merkmale der beschriebenen Ausführungsformen sind beliebig miteinander innerhalb einer einzigen Trockenbauschraube kombinierbar. Es wird darauf hingewiesen, dass die erfindungsgemässe Vorrichtung auch für andere Zwecke geeignet ist.

## Patentansprüche

1. Trockenbauschraube zur Befestigung einer Gipskartonplatte an einem Metallträger, mit einem Kopf, einem Spitzenabschnitt und einem länglichen Schaft, wobei der Schaft in seiner Längsrichtung eine Achse definiert und sich entlang der Achse vom Kopf bis zum Spitzenabschnitt erstreckt, wobei der Spitzenabschnitt sich an den Schaft anschliesst und dafür geeignet ist, in der Gipskartonplatte ein erstes Bohrloch und in dem Metallträger ein zweites Bohrloch zu erzeugen, wenn die Trockenbauschraube in Richtung der Achse durch die Gipskartonplatte getrieben wird, wobei die Trockenbauschraube ein Aufweitelement aufweist, welches dafür geeignet ist, das erste Bohrloch in der Gipskartonplatte bis zu einem ersten Bohrlochdurchmesser t aufzuweiten und bei einem Auftreffen auf den Metallträger abzubrechen, wobei der Kopf den ersten Bohrlochdurchmesser t mit einem Einpressvolumen V₁ überschreitet, wobei der Schaft einen mit einem Gewinde versehenen Gewindeabschnitt und einen entlang der Achse zwischen dem Gewindeabschnitt und dem Kopf angeordneten, gewindefreien Unterkopfabschnitt aufweist, welcher den ersten Bohrlochdurchmesser t mit einem Aufnahmevolumen V₂ unterschreitet, welches mindestens 80% des Einpressvolumens V₁ beträgt.

2. Vorrichtung nach Anspruch 1, wobei das Aufnahmevolumen V₂ mindestens 100% des Einpressvolumens V₁ beträgt.

3. Vorrichtung nach einem der vorhergehenden Ansprüche, wobei das Aufweitelement einen oder mehrere insbesondere gleichmässig auf einem Umfang der Trockenbauschraube verteilte Vorsprünge umfasst.

4. Vorrichtung nach Anspruch 3, wobei der oder die Vorsprünge flügelförmig ausgebildet sind.

5. Vorrichtung nach einem der vorhergehenden Ansprüche, wobei das Aufweitelement an dem Gewindeabschnitt angeordnet ist.

6. Vorrichtung nach einem der vorhergehenden Ansprüche, wobei das Gewinde von dem Aufweitelement unterbrochen wird.

7. Vorrichtung nach einem der vorhergehenden Ansprüche, wobei das Aufweitelement an dem Spitzenabschnitt angeordnet ist.

8. Vorrichtung nach einem der vorhergehenden Ansprüche, wobei sich das Gewinde des Gewindeabschnitts in dem Spitzenabschnitt fortsetzt.

9. Vorrichtung nach einem der vorhergehenden Ansprüche, wobei das Gewinde des Gewindeabschnitts geeignet ist, in das zweite Bohrloch in dem Metallträger ein Gegengewinde zu formen.

10. Vorrichtung nach einem der vorhergehenden Ansprüche, wobei das Gewinde des Gewindeabschnitts einen Aussendurchmesser d1 aufweist, welcher höchstens 120%, insbesondere höchstens 100% des ersten Bohrlochdurchmessers t beträgt.

11. Vorrichtung nach einem der vorhergehenden Ansprüche, wobei der Kopf ein Schneidelement zum Zerschneiden einer Kartonageeinfassung der Gipskartonplatte aufweist.

12. Vorrichtung nach Anspruch 11, wobei das Schneidelement an einer dem Spitzenabschnitt zugewandten Unterseite des Kopfes angeordnet ist.

13. Vorrichtung nach einem der Ansprüche 11 bis 12, wobei das Schneidelement eine oder mehrere sägezahnförmige, insbesondere gleichmässig auf einem Umfang der Trockenbauschraube verteilte erste Schneidkanten umfasst.

14. Vorrichtung nach einem der Ansprüche 11 bis 13, wobei das Schneidelement eine oder mehrere spiralförmige, insbesondere gleichmässig auf einem Umfang der Trockenbauschraube verteilte zweite Schneidkanten umfasst.

15. Vorrichtung nach Anspruch 14 wobei die eine oder mehreren zweiten Schneidkanten gegensinnig zu dem Gewinde des Gewindeabschnitts orientiert sind.
